# FASCICULE DE BREVET EUROPEEN

(11) **EP 2 715 910 B1**
(45) Date de publication et mention de la délivrance du brevet: **13.07.2016**
(21) Numéro de dépôt: 12728723.3
(22) Date de dépôt: 31.05.2012
(51) Int. Cl.: H02M 3/157, H02J 15/00, H02J 7/34

(54) **SYSTÈME DE STOCKAGE D'ÉNERGIE CAPACITIF**
KAPAZITIVES ENERGIESPEICHERSYSTEM
CAPACITIVE ENERGY STORAGE SYSTEM

(30) Priorité: 31.05.2011 FR 1154732
(43) Date de publication de la demande: 09.04.2014
(73) Titulaire: Adetel Equipment, 69130 Ecully (FR)
(72) Inventeur: CROSET, Alain, 31200 Toulouse (FR)
(74) Mandataire: Verriest, Philippe
(86) Numéro de dépôt international: PCT/FR2012/051225
(87) Numéro de publication internationale: WO 2012/164232

(56) Documents cités:
- DE-A1-102004 031 216
- DE-A1-102008 063 213
- US-A- 5 969 505

## Description

La présente invention concerne un système de stockage d'énergie capacitif et un procédé de commande d'un tel système.

La plupart des véhicules électriques récents utilisés dans les réseaux de transport publics sont équipés de freinage électrique, appelé aussi freinage récupératif. Dans ces véhicules, une partie de l'énergie cinétique de décélération est transformée en énergie électrique. Celle-ci est alors transmise à la ligne d'alimentation et utilisée par un ou plusieurs véhicules en accélération. Dans le cas où aucun véhicule n'est en mesure d'utiliser cette énergie, celle-ci est alors dissipée en chaleur dans des résistances embarquées sur le véhicule décélérant.

Afin d'éviter la perte d'énergie dans les résistances de freinage, un dispositif additionnel est souvent associé à des postes de redressements ou sous-stations afin de récupérer l'énergie de freinage électrique disponible sur le réseau. Celle-ci est ensuite stockée pour être dans un deuxième temps renvoyée au réseau de distribution électrique où elle pourra être utilisée par un véhicule en accélération.

Mais ces dispositifs de stockage connus utilisent généralement un convertisseur réversible unique de forte puissance associé en série à un arrangement de supercapacités câblées en série-parallèle. Cette architecture n'est pas tolérante aux défaillances électroniques internes du dispositif, ne permet pas de gérer finement et efficacement les supercapacités, offre un faible rendement électrique et économique du fait de l'utilisation de composants électroniques de commutation de calibre important dans le convertisseur, et ne permet pas d'accéder à une maintenance simplifiée.

Le document DE 10 2008 063213 du 1 juillet 2010 décrit un système de stockage capacitif selon le preambule de la revendication indépendante 1. L'invention est définie par les caractéristiques des revendications indépendantes. Les modes de réalisations préférés sont définis par les revendications dépendantes.

Un but de la présente invention vise à remédier aux inconvénients mentionnés ci-dessus et propose notamment de fournir un système avec un rendement d'énergie, qui limite les probabilités d'incident d'exploitation dont la maintenance est facilitée, et qui par sa gestion de branches indépendantes permet d'optimiser la durée de vie des composants de stockage.

A cet effet et selon un premier aspect, l'invention propose un système de stockage d'énergie capacitif apte à être relié à un réseau de distribution de puissance électrique qui comprend au moins un moyen de conversion du courant et au moins un moyen de stockage capacitif de l'énergie caractérisé en ce qu'il comporte une pluralité de branches disposées en parallèle comprenant chacune des moyens de conversion du courant et des moyens de stockage capacitif, les moyens de conversion étant disposés en série avec les moyens de stockage capacitif, chaque branche comprenant des moyens de régulation de la tension des moyens de stockage capacitif, les moyens de régulation de tension étant associés à des moyens de limitation de courant en fonction de la tension et chaque branche comprenant des moyens de régulation de la tension d'entrée UF de sorte à ajuster en permanence le point de fonctionnement optimum.

Dans la présente demande, par l'expression 'point de fonctionnement optimum', il est entendu un point de fonctionnement permettant d'une part, de récupérer le maximum d'énergie présent à l'entrée A du réseau de distribution (tension UF) en ne prélevant aucune énergie dans la branche d'alimentation (courant IST). D'autre part, ce point de fonctionnement optimum permet de privilégier la génération d'énergie sauvegardée dans des groupes de supercapacités prioritairement à la génération d'énergie par alimentation.

Ce fonctionnement optimum est obtenu en ajustant en permanence les seuils de charge CCUFCH et de décharge CCUFDCH par le calcul de la tension à vide moyenne CCUF.

Dans la présente demande, 'la tension d'entrée UF' correspond à la tension à l'entrée du système de stockage d'énergie capacitif, fournie par le réseau de distribution.

Grâce à cette structure de branches câblées en parallèle, l'énergie totale pouvant être stockée dans le système est égale à la somme des énergies de chaque branche et la puissance totale est égale à la somme des puissances de chaque branche. Le système selon l'invention permet ainsi l'utilisation de convertisseurs de faibles puissances par comparaison au système doté d'un unique convertisseur associé à un arrangement parallèle-série de supercapacités ce qui permet une architecture modulaire. Ceci facilite l'accès à des composants mieux diffusés et donc plus disponibles, possédant de faibles pertes de conduction. De même, le rendement de la conversion aller/retour au niveau des moyens de conversion ainsi que le rendement de stockage/déstockage dans les moyens de stockage sont optimisés. De plus, l'ajustement en permanence du point de fonctionnement optimum permet d'augmenter la durée de vie des supercapacités tout en maximisant l'énergie transférée. En outre, ces dispositions permettent de limiter les indisponibilités du système. En effet, chaque branche peut fonctionner de façon indépendante. Lorsqu'une des branches ainsi constituée est hors service, les autres branches peuvent continuer à fonctionner en offrant un mode dégradé, en attendant qu'une opération de maintenance ou de réparation du système soit effectuée.

De préférence, le point de fonctionnement optimum est déterminé en fonction d'une estimation d'une tension d'une tension à vide aux bornes des branches, fournie par le réseau de distribution.

Selon un aspect de l'invention, le système de stockage d'énergie capacitif comprend une ou plusieurs armoires disposées en parallèles, chacune des armoires comprenant une pluralité de branches disposées en parallèle. Cette configuration permet ainsi d'adapter le système en fonction du profil d'utilisation, de la puissance et l'énergie nécessaire au réseau de distribution sans nécessiter de redimensionnement du système.

Selon un mode de réalisation particulier de l'invention, chaque branche du système comprend un dispositif d'isolation électrique de la branche de sorte à permettre une opération de maintenance de chaque branche. Ainsi en cas de disfonctionnement d'un composant électrique pouvant entrainer la défaillance d'une branche, celle-ci pourra être isolée par le dispositif interne de protection, permettant au reste du système de continuer de fonctionner. Une opération de maintenance pourra être ensuite réalisée lors d'une période de mise hors service de l'équipement, par exemple de nuit, sans restreindre la disponibilité du système.

Avantageusement, les moyens de conversion et les moyens de stockage capacitif de chaque branche sont amovibles de sorte à faciliter leur installation ou désinstallation selon les besoins de maintenance.

De préférence, chaque armoire comprend des glissières sur lesquelles les moyens de conversion et les moyens de stockage capacitif peuvent être montées de façon amovible de sorte à permettre une maintenance sans outillage spécifique.

Les moyens de stockage capacitif comprennent typiquement des supercapacités en série permettant de maitriser le courant dans les moyens de stockage indépendamment d'une branche à l'autre et donc d'optimiser le rendement de chaque branche en augmentant la durée de vie des composants tout en maîtrisant les risques de défaillance.

De préférence, les moyens de conversion sont des convertisseurs réversibles permettant à l'énergie stockée dans les supercapacités d'être libérée pour venir satisfaire les besoins du réseau en énergie.

Selon une variante de réalisation de l'invention, le système de stockage comprend des moyens de gestion d'une charge ou d'une décharge des moyens de stockage capacitif se basant sur l'utilisation de seuils de tension et il comprend également des moyens d'auto-apprentissage agencés pour modifier les seuils de tension en fonction d'une analyse en temps réel des besoins en courant et en tension dans le réseau de distribution de puissance électrique afin d'optimiser le procédé de charge et de décharge. Dans la présente demande, par l'expression 'seuils de tension' on entend des seuils de tension de charge CCUFCH et de décharge CCUFDCH des supercapacités, comparés à la tension UF fournie par le réseau de distribution. De la même manière, le système comprend des moyens de régulation agencés pour réguler la tension dans le réseau de distribution de puissance électrique afin d'optimiser l'énergie disponible sur le réseau. A la suite des changements d'états de charge et de décharge, le fonctionnement du système est ainsi régulé en fonction du besoin. Le changement d'état suivant peut avoir lieu soit sur un seuil remis à jour suite à l'apprentissage soit sur limitation de l'asservissement. Ce principe permet de stocker de faibles énergies, inaccessibles sans les moyens d'auto-apprentissage et de ne pas stocker une énergie qui peut être utilisée par un autre véhicule.

De préférence, les moyens de régulation de la tension sont agencés pour réaliser la régulation en fonction de la tension mesurée aux bornes des supercapacités de chaque branche, la mesure de l'intensité du courant entre le convertisseur et les supercapacités et la mesure de la tension à l'entrée du système de stockage.

Selon un deuxième aspect, l'invention concerne une infrastructure de transports de passagers électriques comprenant au moins un véhicule équipé d'un dispositif de freinage récupératif et au moins un système de stockage d'énergie capacitif tel que précédemment décrit, le système de stockage capacitif étant destiné à stocker l'énergie générée par le dispositif de freinage. Cette infrastructure permet ainsi de diminuer la consommation électrique d'un réseau de transport urbain et de soutenir la tension dans les zones éloignées des sources d'alimentation limitant les probabilités d'incident d'exploitation. Les transports concernés comprennent notamment les trains, les tramways, les métros légers, les trolleybus ou autres moyens de transports alimentés par une ligne aérienne de captation ou par des rails d'alimentation.

Selon un troisième aspect, l'invention concerne un procédé de commande d'un système de stockage d'énergie capacitif apte à être relié à un réseau de distribution de puissance électrique, le système de stockage comportant une pluralité de branches disposées en parallèle comprenant chacune des moyens de conversion du courant et des moyens de stockage capacitif, les moyens de conversion étant disposés en série avec les moyens de stockage capacitif, le procédé comprenant les étapes consistant à :
- mesurer aux bornes des branches la tension UF fournie par le réseau de distribution à l'entrée du système de stockage,
- déterminer un point de fonctionnement optimum,
- déterminer au moins un seuil de tension de charge CCUFCH et un seuil de tension de décharge CCUFDCH, et
- comparer la tension d'entrée UF avec un seuil de charge et un seuil de décharge afin de déterminer un mode de fonctionnement de charge et de décharge.

Avantageusement, le point de fonctionnement optimum optimum est déterminé en fonction d'une estimation d'une tension à vide aux bornes des branches, fournie par le réseau de distribution.

Selon une disposition particulière, le procédé comprend une étape d'auto-apprentissage permettant de déterminer la tension à vide CCUF sous forme d'une moyenne de valeurs de tensions UF acquises pendant une période où le courant IST est inférieur à un seuil prédéterminé.

De préférence, les étapes de détermination des seuils de tension de charge CCUFCH et de décharge CCUFDCH sont réalisées en fonction de la valeur de la tension CCUF et d'un décalage prédéterminé. Ce décalage permet d'éviter un basculement possible entre la charge et la décharge du fait des erreurs de mesure.

On décrit à présent, à titre d'exemples non limitatifs, plusieurs modes de réalisation possibles de l'invention, en référence aux figures annexées. Dans la suite de la description, par souci de simplification, les éléments communs aux différentes formes de réalisation portent les mêmes références numériques.
La figure 1 est un schéma de principe d'une infrastructure de transports de passagers électriques doté d'un dispositif de freinage récupératif et d'un système de stockage d'energie capacitif selon un mode de réalisation de l'invention.
La figure 2 est un schéma de principe d'un système de stockage d'énergie capacitif selon un mode de réalisation de l'invention.
La figure 3 est un schéma illustrant une armoire d'un système dotée de supercapacités et de convertisseurs selon un mode de réalisation de l'invention.
La figure 4 est un diagramme électrique illustrant le système de stockage d'énergie comprenant plusieurs armoires de stockage et une armoire d'appareillage et de supervision selon un mode de réalisation de l'invention.
La figure 5 est un diagramme de commande général du système capacitif selon un mode de réalisation de l'invention.
La figure 6 est un diagramme d'auto-apprentissage du système capacitif selon un mode de réalisation de l'invention.
La figure 7 est un diagramme de commande détaillé du système capacitif selon un mode de réalisation de l'invention.
La figure 8 est un organigramme électrique illustrant le fonctionnement des moyens de régulation de la tension des supercapacités selon un mode de réalisation de l'invention.

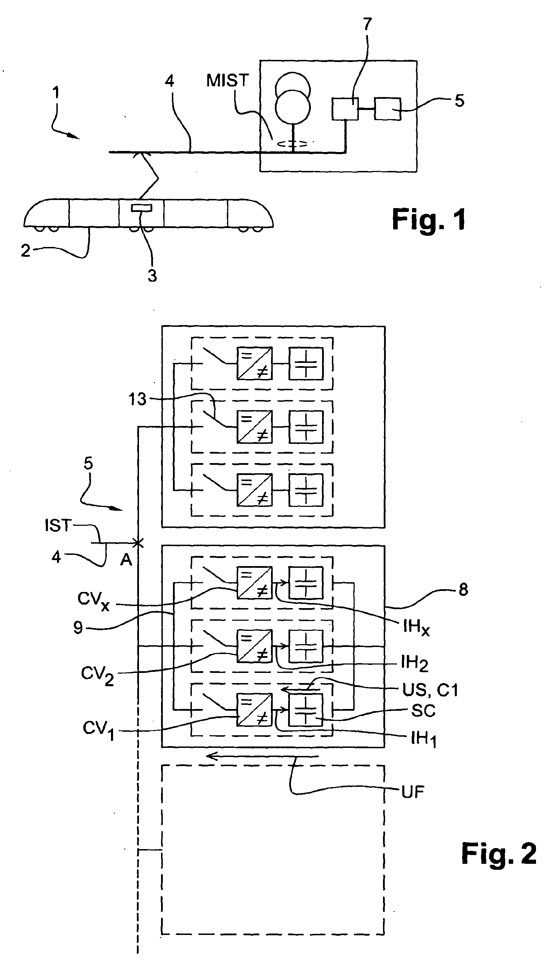

La figure 1 représente une infrastructure de transports de passagers électriques 1 comprenant un train 2 doté d'un dispositif de freinage récupératif 3. Ce dispositif de freinage récupératif 3 transforme l'énergie de cinétique de décélération du train 2 en énergie électrique avant de l'envoyer au réseau de distribution de puissance électrique 4. Cette énergie est ensuite stockée dans le système de stockage d'énergie capacitif 5 relié au réseau de distribution 4, par exemple au niveau d'une sous-station 6 de l'infrastructure 1. Comme illustré à la figure 1 une armoire d'appareillage et de supervision 7 permet de commander le fonctionnement du système de stockage d'énergie 5 .

La figure 2 illustre un système de stockage d'énergie capacitif 5 comprenant plusieurs armoires 8 cablées en parallèles avant d'être reliées à un réseau de distribution de puissance électrique 4 partiellement représenté. Cette architecture de cablage permet de cumuler l'énergie et la puissance de chaque armoire 8. Il est ainsi possible d'adapter le système 5 de sorte à stocker des quantités variables d'énergie disponible sur le réseau 4 ou d'alimenter ce dernier selon l'utilisation souhaitée.

Chaque armoire 8 est composée de plusieurs branches 9 indépendantes câblées en parallèle sur le bus continu de l'armoire 8 de sorte que l'énergie et la puissance de chaque armoire 8 est respectivement égale à la somme des énergies et des puissances de chacune des branches 9.

Chaque branche 9 comprend en série un moyen de conversion du courant tel qu'un convertisseur réversible CVi (i étant un entier variant de 1 à x) de type DC-DC et un moyen de stockage capacitif tel que des groupes SC de supercapacités 12 en série. La taille et la masse limitées de ces composants CVi,et SC permettent la construction du système 5 sous forme de sous-ensembles modulaires amovibles.Le courant IST représenté à la figure 2, est un courant d'alimentation du réseau de distribution 4 et les courants IHi sont des courants circulant dans les branches des groupes SC des supercacités 12. La tension UF est une tension de la ligne mesurée dans le dispositif et les tensions USCi sont des tensions des branches des groupes SC de supercapacités 12.

Comme illustré à la figure 2, chacune des branches 9 est dotée d'un dispositif d'isolation électrique 13 de sorte à protéger la branche 9 d'une défaillance en cas de disfonctionnement de l'un de ses composants. En pareil cas, le système 5 pourra ainsi continuer de fonctionner et une opération de maintenance pourra être réalisée lors d'une période de mise hors service de l'équipement, par exemple de nuit, sans en restreindre la disponibilité.

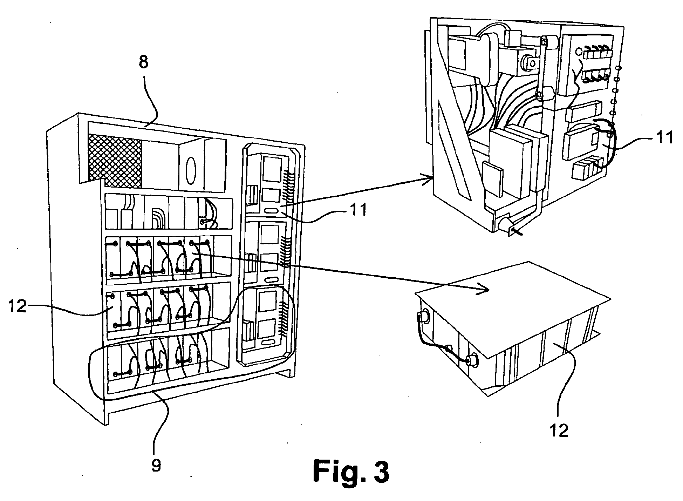

La figure 3 représente l'une des armoires 8 d'un système 5 selon l'invention. Dans cet exemple, elle est constituée de trois branches 9 dotées chacune d'un convertisseur CVi relié en série avec huit groupes SC de supercapacités 12 formant des modules amovibles. Des glissières non représentées sont optionnellement prévues dans chaque armoire 8 afin de pouvoir monter ou démonter facilement les groupes SC de supercapacités 12 et les convertisseurs CVi. Ceci permet d'assurer une maintenance sans outillage spécifique.

Le nombre important de branches 9 câblées en parallèle sur plusieurs armoires 8 permet l'emploi de convertisseurs CVi de faible puissance par comparaison au convertisseur de forte capacité, tel qu'un convertisseur de traction pour le domaine ferroviaire, ce qui facilite l'accès à des composants mieux diffusés et donc plus disponibles, possédant de faibles pertes de conduction.

De plus, le nombre important de branches 9 en parallèle permet de structurer le moyen de stockage sous forme de groupes SC de supercapacités 12 cablées en série sur la branche 9. Ceci a un impact direct sur la maitrise du courant des groupes SC de supercapacités 12 indépendamment d'une branche 9 à l'autre. Il est alors possible de tirer le meilleur parti de chaque branche 9 en optimisant leur durée de vie tout en maitrisant les risques associées aux défaillances éventuelles de ces composants. Cette architecture permet ainsi de rendre le système de stockage d'énergie électrique 5 basé sur la technologie des groupes SC de supercapacités 12 économiquement accessible.

Par ailleurs, en cas d'intervention sur le câblage haute tension ou pour une opération de maintenance dans le local où est situé le système 5, les règles de sécurité imposent de décharger les groupes SC de supercapacités 12.

Les solutions antérieures de récupération d'énergie de technologie identique font appel à une décharge résistive dans l'équipement. Le temps de décharge est alors voisin d'une heure et l'énergie précédemment récupérée est perdue sous forme de chaleur.

Le système 5 selon l'invention permet d'une part de raccourcir le temps de décharge, d'autre part de ne pas gaspiller l'énergie emmagasinée. En cas de demande de décharge par un opérateur, le système 5 privilégie la décharge dans la ligne du réseau de distribution 4, en utilisant les sous-ensembles et composants fonctionnels. Tout ou partie de l'énergie est alors renvoyée sur la ligne, la partie d'énergie non renvoyée étant déchargée dans une résistance de décharge interne 14. Le temps de décharge est alors raccourci des deux-tiers environ.

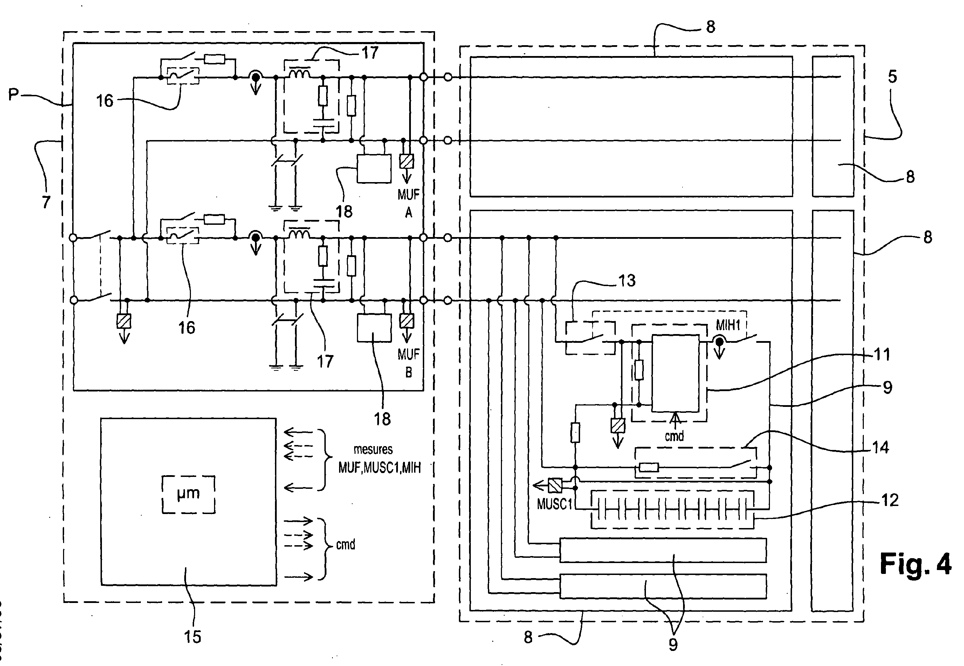

La figure 4 représente un système de stockage d'énergie capacitif 5 selon l'invention associée à une armoire d'appareillage et de supervision 7. L'armoire d'appareillage 7 comprend deux circuits pour la commande de quatre armoires de stockage d'énergie 8 comportant chacune trois branches 9 cablées en parallèle, dotées chacune d'un convertisseur CVi cablé en série avec plusieurs groupes SC de supercapacités 12.

Les deux circuits de l'armoire d'appareillage et de supervision 7 comprennent des moyens de contrôle-commande 15 et un circuit de puissance P comportant notamment pour chaque couple de deux armoires 8 un disjoncteur 16, des moyens de filtrage 17, un écréteur 18 et des moyens de mesure de tension MUF. Ces deux circuits permettent de gérer la charge et la décharge des groupes SC de supercapacités 12.

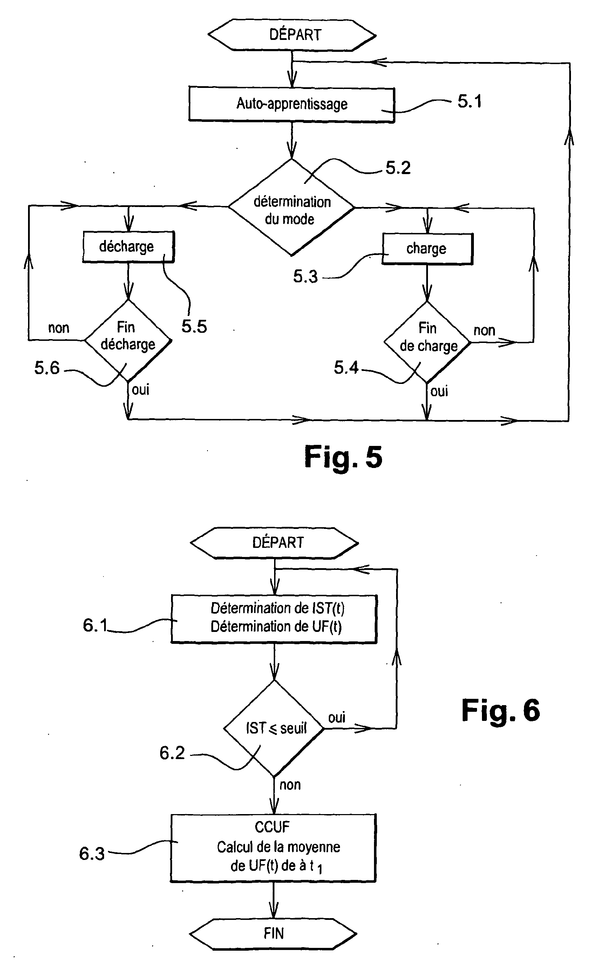

Nous allons à présent décrire le procédé mis en oeuvre en référence aux figures 5, 6, 7. Comme illustré à la figure 5, les circuits sont basés sur un principe de régulation et d'auto-apprentissage utilisant une matrice d'état faisant référence à des seuils de tension qui varient selon l'auto-apprentissage de ces seuils en fonction d'une analyse en temps réel des besoins en courant et tension de la ligne d'alimentation ou du réseau de distribution. A la suite de ces changements d'états de charge et de décharge, le fonctionnement est régulé en fonction du besoin et de l'énergie disponible, le changement d'état suivant peut avoir lieu sur un seuil remis à jour suite à l'apprentissage. Ce principe permet de récupérer de faible énergies, inaccessibles avec un système ne comprenant qu'une matrice d'état sans système d'auto-apprentissage. Le même principe permet d'éviter au sytème 5 de récupérer de l'énergie utile à un véhicule 2 sur le réseau 4. Ainsi, comme décrit sur le diagramme de contrôle général de la figure 5, l'étape 5.1 permet de déterminer une consigne de tension d'entrée corrigée CCUF. Puis l'étape 5.2 détermine un seuil de la tension de charge CCUFCH et un seuil de tension de décharge CCUFDCH, et compare la tension d'entrée UF avec les deux seuils pour déterminer un mode de fonctionnement de charge ou de décharge.

Lorsque le mode de charge est sélectionné à l'étape 5.2, les groupes SC de supercapacités 12 sont chargés à l'étape 5.3. L'étape 5.4 détermine si la charge est terminée. Si la charge est incomplète, le processus revient à l'étape de charge 5.3 puis à l'étape de détermination 5.4 jusqu'à ce que la charge complète soit détectée. Lorsque la charge est complète l'étape 5.1 est réitérée.

Lorsque le mode de décharge est sélectionné à l'étape 5.2, les groupes SC des supercapacités 12 sont déchargés à l'étape 5.5. L'étape 5.6 vérifie ensuite si la décharge est complète, auquel cas l'étape 5.1 est réitérée. Dans le cas contraire, l'étape 5.5 de décharge est réitérée. Nous décrivons ci-dessous les moyens mis en oeuvre pour l'auto-apprentissage et la régulation, comme illustré à la figure 6.

Les moyens d'auto-apprentissage comprennent un organe de contrôle, par exemple un microprocesseur µc, disposé en particulier dans l'armoire d'appareillage et de supervision 7.

L'organe de contrôle µc met en oeuvre un algorithme d'apprentissage destiné à déterminer une consigne de tension d'entrée corrigée CCUF en fonction des paramètres d'entrée suivants :
- la mesure d'un courant fourni IST au réseau au niveau d'une sous-station 6, cette mesure de courant étant fournie par un capteur de courant MISTvisible sur la figure 1 , et une consigne de tension d'entrée UF(étape 6.1).

En particulier, l'algorithme d'apprentissage réalise un filtrage et une mise à l'échelle de la mesure de courant IST. puis selon l'étape 6.2, le courant IST est comparé avec un seuil constant donné, le résultat de cette comparaison étant utilisé par un composant de régulation de type intégral. Le signal provenant du composant de régulation fait l'objet d'une limitation pour obtenir un signal de correction de la tension de consigne qui est ajouté à cette tension de consigne pour obtenir une consigne de tension d'entrée corrigée CCUF (étape 6.3) La consigne de tension d'entrée corrigée CCUF correspond à la moyenne des valeurs de tension à vide UF acquises pendant une période où le courant IST est inférieur à un seuil constant prédéterminé. Lorsque le courant IST est inférieur à la valeur seuil prédéterminée, une boucle périodique permet le retour à l'étape 6.1.

En dehors du mode de récupération dans lequel les groupes SC de supercapacités 12 sont en charge, un mode « reset » est activé, ce qui permet de diminuer la correction de la tension de consigne.

Dans un mode de réalisation représenté à la figure 4 , le système 5 selon l'invention comprend des moyens de régulation de la tension des groupes SC de supercapacités 12.

A cet effet, ces moyens de régulation comprennent un organe de contrôle, par exemple le microprocesseur µc évoqué précédemment, disposé en particulier dans l'armoire d'appareillage et de supervision 7.

L'organe de contrôle µc met en oeuvre une boucle de régulation, mettant en oeuvre les étapes décrites en référence à la figure 5, destinée à générer une commande cmd du convertisseur CVi en fonction des paramètres d'entrée suivants :
- La tension USC mesurée par un organe de mesure de tension continue (MUSC1) aux bornes des groupes SC de supercapacités 12 de chaque branche 9
- l'intensité du courant IH mesurée par un capteur de courant MIH1 entre le convertisseur CVi et les groupes SC de supercapacités 12
- La tension UF mesurée par un capteur de tension MUF disposé à l'entrée du système de stockage 5.

La commande cmd de chaque convertisseur CVi est déterminée sur la base des paramètres ci-dessus en utilisant :
- un gabarit de limitation de courant IH en fonction de la tension d'entrée UF et de la tension USC dans la branche 9, et
- une boucle de régulation de tension d'entrée UF.

En particulier, la commande cmd consiste en un réglage de l'angle de phase des composants IGBT (transistor bipolaire à grille isolée) constituant les convertisseurs CVi.

L'ensemble de ces deux boucles permet d'ajuster en permanence le point de fonctionnement optimum, et d'ainsi augmenter la durée de vie des supercapacités 12 tout en maximisant l'énergie transférée.

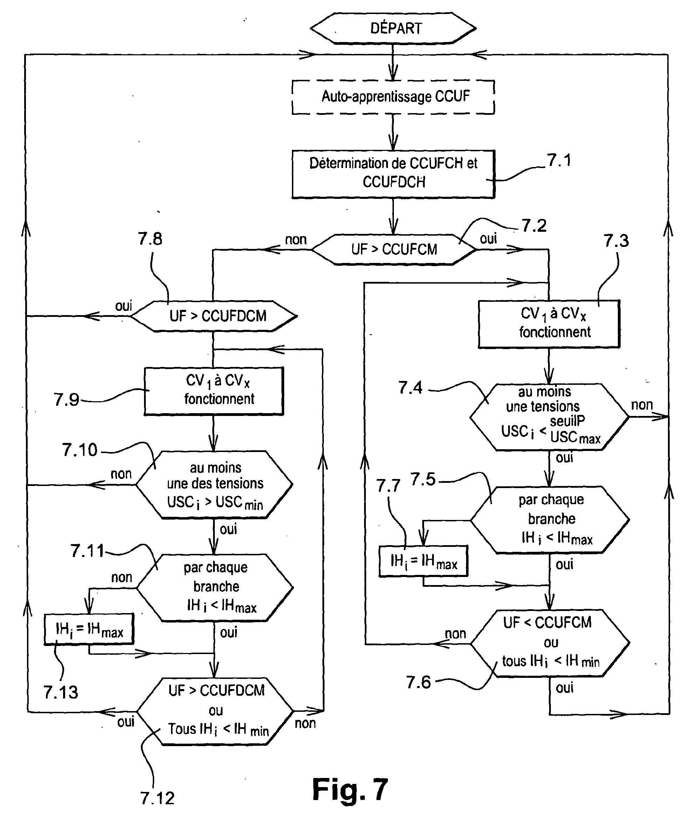

Les étapes de régulation sont maintenant décrites de façon détaillées en référence à la figure 7. Une étape d'autoapprentissage peut être tout d'abord réalisée comme précédemment décrit.

Une étape 7.1 consiste à déterminer un seuil de la tension de charge CCUFCH et un seuil de tension de décharge CCUFDCH à partir de la valeur de la tension CCUF et d'un décalage prédéterminé de sorte à lisser les erreurs de mesure. Puis l'étape 7.2 consiste à comparer la tension d'entrée UF avec le seuil de la tension de charge CCUFCH. Lorsque la tension d'entrée UF est supérieure au seuil CCUFCH le mode de fonctionnement de charge est engagé à l'étape 7.3 de sorte que les convertisseurs CVi sont mis en fonctionnement. Puis l'étape 7.4 vérifie si au moins une des tensions USCi est inférieure à un seuil USCmax auquel cas, le courant IHi est comparé à IHmax pour chacune des branches à l'étape 7.5. Lorsqu'un courant IHi est inférieur à IHmax, l'étape 7.6 consiste à vérifier si la tension d'entrée UF est inférieure au seuil CCUFCH ou si tous les courants IHi sont inférieurs à un seuil IHmin. Si une de ces deux conditions sont réalisées, le processus de charge est stoppé et on retourne à l'étape 7.1.

Lorsque, à l'étape 7.4, toutes les tensions USCi sont supérieures à USCmax, alors la charge est terminée et on retourne à l'étape 7.1.

Lorsque dans chaque branche un courant IHi est supérieur à IHmax à l'étape 7.5, alors le courant IHi est borné à IHmax par l'étape 7.7 puis le processus passe à l'étape 7.6.

Lorsque la tension d'entrée UF est inférieure au seuil CCUFCH de l'étape 7.2, alors la tension d'entrée UF est comparée au seuil CCUFDCH à l'étape 7.8. Lorsque la tension UF est supérieure au seuil CCUFDCH alors le processus est ramené à l'étape 7.1. Par contre, lorsque la tension UF est inférieure au seuil CCUFDCH alors la décharge est amorcée à l'étape 7.9 où les convertisseurs sont mis en fonctionnement.

Puis l'étape 7.10 détermine si au moins une des tensions USCi est supérieure à une tension seuil USCmin auquel cas, le courant IHi est comparé à un seuil IHmax pour chacune des branches à l'étape 7.11. Lorsque le courant IHi est inférieur à IHmax alors il est déterminé si la tension d'entrée UF est supérieur au seuil CCUFDCH ou si tous les courants IHi sont inférieurs à IHmin à l'étape 7.12. Si l'une des deux conditions est vérifiée, les groupes SC de supercapacités 12 sont déchargés et le processus est ramené à l'étape 7.1. si parcontre, aucune des conditions n'est satisfaite, les supercapacités ne sont pas complétement déchargées et le processus est ramené à l'étape 7.9.

Si par contre, le courant IHi est supérieur à IHmax à l'étape 7.11, alors le courant IHi est borné à la valeur seuil de IHmax par l'étape 7.13 avant de passer à l'étape 7.12.

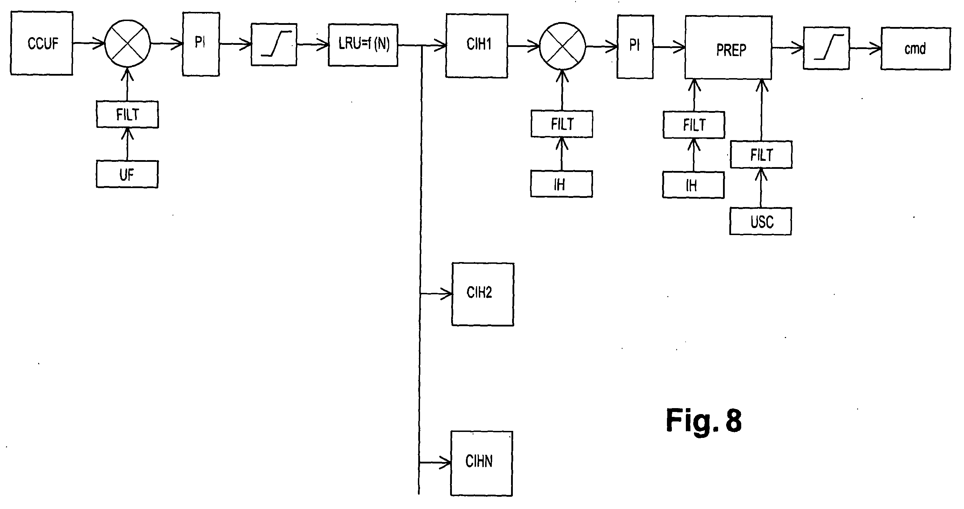

Par ailleurs, lorsqu'à l'étape 7.10 toutes les tensions USCi sont inférieures à une tension seuil USCmin, alors le processus est ramené à l'étape 7.1. après une étape d'auto-apprentissage CCUF éventuelle. Une boucle de régulation telle qu'implémentée est décrite de façon plus précise selon un mode de réalisation illustré à la figure 8.

En entrée de cette boucle de régulation, la consigne de tension d'entrée corrigée CCUF (si le dispositif d'apprentissage a été utilisé au préalable) est comparée avec la mesure de tension UF ayant été préalablement filtrée (FILT).

Le résultat de cette comparaison est utilisée dans un composant de régulation Proportionnel / Intégral PI.

La sortie de composant de régulation commande un composant de limitation qui détermine la tension des supercapacités USC pour chaque branche 9 ou ligne de récupération de tension LRU en fonction d'un gabarit de limitation de la tension USC.

Sur la base de la tension USC calculée, une consigne de courant IH dans chaque branche 9 ou LRU est déterminée dans un composant qui prend en compte le nombre total N de ces branches 9.

Sur la base de ces consignes de courant IH de chaque branche 9, une boucle de régulation propre à chaque branche 9 est mise en place.

En entrée de cette boucle de régulation, une consigne de courant IH est comparée avec la mesure de courant IH ayant été préalablement filtrée (FILT).

Le résultat de cette comparaison est utilisée dans un composant de régulation Proportionnel / Intégral PI.

La sortie de composant de régulation commande un composant de prépositionnement (PREP) qui permet de faire fonctionner les hacheurs des convertisseurs CVi (visibles à la figure 4) à leur optimum quel que soit le mode de fonctionnement continu ou discontinu, en prenant en compte des valeurs filtrées des tensions UF et USC.

La sortie de composant de prépositionnement (PREP) commande un composant de limitation de la tension USC qui génère la commande de charge ou de décharge des convertisseurs CVi en fonction d'un gabarit de limitation.

Il est bien entendu possible d'utiliser une tension d'entrée de consigne UF qui n'a pas été corrigée par le dispositif d'auto-apprentissage, le dispositif d'auto-apprentissage et la boucle de régulation de la tension des groupes SC de supercapacités 12 de chaque branche 9 pouvant être appliqués de façon indépendante.
Ces dispositions permettent d'obtenir une régulation améliorée par rapport aux solutions antérieures de récupération d'énergie mettant en oeuvre un convertisseur piloté à la manière d'un chargeur batterie en y associant une réversibilité, intégrant une boucle de régulation de tension globale du système de stockage et une limitation de courant utilisant un seuil fixe.

## Revendications

1. Système de stockage d'énergie capacitif (5) apte à être relié à un réseau de distribution de puissance électrique (4) par une entrée (A) et qui comprend au moins un moyen de conversion du courant et au moins un moyen de stockage capacitif de l'énergie comportant une pluralité de branches (9) disposées en parallèle comprenant chacune en série un moyen de conversion du courant (CVi) et un moyen de stockage capacitif (SC), le moyen de conversion du courant (CVi) étant disposé en série avec le moyen de stockage capacitif (SC), **caractérisé en ce que** chaque branche (9) comprend des moyens de régulation de la tension (USC) du moyen de stockage capacitif (SC), les moyens de régulation de tension étant associés à des moyens de limitation de courant en fonction de la tension (USC) et chaque branche (9) comprend des moyens de régulation de la tension d'entrée (UF) du système de stockage d'énergie capacitif (5) de sorte à ajuster en permanence un point de fonctionnement optimum permettant d'une part, de récupérer le maximum d'énergie présent à l'entrée (A) du réseau de distribution (4) tout en ne prélevant aucune énergie dans la branche d'alimentation et d'autre part permettant de privilégier la génération d'énergie sauvegardée dans les moyens de stockage capacitif (SC) des branches (9) prioritairement à la génération d'énergie par alimentation, ce point de fonctionnement optimum étant obtenu en ajustant en permanence des seuils de charge (CCUFCH) et de décharge (CCUFDCH) déterminés par le calcul d'une tension à vide moyenne du système de stockage d'énergie capacitif (5) correspondant à une consigne de tension d'entrée corrigée (CCUF).

2. Système de stockage d'énergie capacitif (5) selon la revendication 1 **caractérisé en ce qu'**il comprend une ou plusieurs armoires (8) disposées en parallèles, chacune des armoires (8) comprenant une pluralité de branches (9) disposées en parallèle.

3. Système de stockage d'énergie capacitif (5) selon l'une des revendications 1 ou 2 **caractérisé en ce que** chaque branche (9) comprend un dispositif d'isolation électrique (13) de la branche (9) de sorte à permettre une opération de maintenance de chaque branche (9).

4. Système de stockage d'énergie capacitif (5) selon l'une des revendications 1 à 3 **caractérisé en ce que** le moyen de conversion du courant (CVi) et le moyen de stockage capacitif (SC) de chaque branche (9) sont amovibles.

5. Système de stockage d'énergie capacitif (5) selon l'une des revendications 1 à 4 **caractérisé en ce que** chaque armoire (8) comprend des glissières sur lesquelles le moyen de conversion du courant (CVi) et le moyen de stockage capacitif (SC) peuvent être montées de façon amovible.

6. Système de stockage d'énergie capacitif (5) selon l'une des revendications 1 à 5 **caractérisé en ce que** le moyen de stockage capacitif (SC) comprend des groupes (SC) de supercapacités (12) en série.

7. Système de stockage d'énergie capacitif (5) selon l'une des revendications 1 à 6 **caractérisé en ce que** le moyen de conversion comprend un convertisseur réversible (CVi).

8. Système de stockage d'énergie capacitif (5) selon l'une des revendications 1 à 7 **caractérisé en ce qu'**il comprend des moyens d'auto-apprentissage agencés pour modifier les seuils de tension en fonction d'une analyse en temps réel des besoins en courant et en tension dans le réseau de distribution de puissance électrique (4).

9. Système de stockage d'énergie capacitif (5) selon les revendications 6 et 7 **caractérisé en ce que** les moyens de régulation de la tension sont agencés pour réaliser la régulation en fonction de la tension mesurée aux bornes des groupes (SC) de supercapacités (12) de chaque branche (9), la mesure de l'intensité du courant (IHi) entre le convertisseur réversible (CVi) et les groupes (SC) de supercapacités (12) et la mesure de la tension (UF) à l'entrée du système de stockage (5).

10. Infrastructure de transports de passagers électriques (1) comprenant au moins un véhicule (2) équipé d'un dispositif de freinage récupératif (3) et au moins un système de stockage d'énergie capacitif (5) selon l'une des revendications 1 à 10, le système de stockage capacitif (5) étant destiné à stocker l'énergie générée par le dispositif de freinage (3).

11. Procédé de commande d'un système de stockage d'énergie capacitif (5) apte à être relié à un réseau de distribution de puissance électrique (4), le système de stockage (5) comportant une pluralité de branches (9) disposées en parallèle comprenant chacune en série un moyen de conversion du courant (CVi) et un moyen de stockage capacitif (SC), , le procédé comprenant les étapes consistant à :
- mesurer aux bornes des branches (9) la tension d'entrée (UF) fournie par le réseau de distribution (4) à une entrée (A) du système de stockage (5),
- déterminer un point de fonctionnement optimum permettant d'une part, de récupérer le maximum d'énergie présent à l'entrée (A) du réseau de distribution (4) tout en ne prélevant aucune énergie dans la branche d'alimentation et d'autre part permettant de privilégier la génération d'énergie sauvegardée dans les moyens de stockage capacitif (SC) des branches (9) prioritairement à la génération d'énergie par alimentation,
- déterminer au moins un seuil de tension de charge (CCUFCH) et un seuil de tension de décharge (CCUFDCH) par le calcul d'une tension à vide moyenne du système de stockage d'énergie capacitif (5) correspondant à une consigne de tension d'entrée corrigée (CCUF), et
- comparer la tension d'entrée (UF) avec un seuil de charge (CCUFCH) et un seuil de décharge (CCUFDCH) afin de déterminer un mode de fonctionnement de charge et de décharge.

12. Procédé selon l'une des revendications 12 à 13, **caractérisé en ce que** le procédé comprend une étape d'autoapprentissage permettant de déterminer la consigne de tension d'entrée corrigée (CCUF) sous forme d'une moyenne de valeurs de tensions (UF) acquises pendant une période où le courant (IST) d'alimentation du réseau de distribution 4 est inférieur à un seuil prédéterminé.

13. Procédé selon l'une des revendications 12 à 14, **caractérisé en ce que** les étapes de détermination des seuils de tension de charge (CCUFCH) et de décharge (CCUFDCH) sont réalisées en fonction de la valeur de la consigne de tension d'entrée corrigée (CCUF) et d'un décalage prédéterminé de cette valeur de consigne de tension d'entrée corrigée (CCUF).

## Patentansprüche

1. Kapazitives Energiespeichersystem (5), das ausgelegt ist, um mit einem Netz zur Verteilung von elektrischer Leistung (4) durch einen Eingang (A) verbunden zu sein, und das mindestens ein Mittel zur Umwandlung des Stroms und mindestens ein kapazitives Energiespeicher Mittel umfasst, umfassend eine Vielzahl von Verzweigungen (9), die parallel angeordnet sind, die jeweils in Serie ein Mittel zur Umwandlung des Stroms (CVi) und ein Mittel zur kapazitiven Speicherung (SC) umfassen, wobei das Mittel zur Umwandlung des Stroms (CVi) in Serie mit dem Mittel zur kapazitiven Speicherung (SC) angeordnet ist, **dadurch gekennzeichnet, dass** jede Verzweigung (9) Mittel zur Regulierung der Spannung (USC) des Mittels zur kapazitiven Speicherung (SC) umfasst, wobei die Mittel zur Regulierung der Spannung mit Mitteln zur Begrenzung des Stroms in Abhängigkeit von der Spannung (USC) assoziiert sind und jede Verzweigung (9) Mittel zur Regulierung der Eingangsspannung (UF) des Systems zur Speicherung von kapazitiver Energie (5) umfasst, um ständig einen optimalen Betriebspunkt einzustellen, der einerseits ermöglicht, die maximale Energie wiederzugewinnen, die am Eingang (A) des Netzes zur Verteilung (4) vorhanden ist, wobei keine Energie von der Versorgungsverzweigung entnommen wird, und andererseits ermöglicht, die Erzeugung von Energie, die in den Mitteln zur kapazitiven Speicherung (SC) der Verzweigungen (9) gespeichert ist, vorrangig gegenüber der Erzeugung von Energie durch Versorgung zu begünstigen, wobei dieser optimale Betriebspunkt erhalten wird, indem ständig Lade- (CCUFCH) und Entladeschwellen (CCUFDCH), bestimmt durch die Berechnung einer mittleren Leerlaufspannung des Systems zur Speicherung von kapazitiver Energie (5), entsprechend einer korrigierten Eingangssollwertspannung (CCUF) eingestellt werden.

2. Kapazitives Energiespeichersystem (5) nach Anspruch 1, **dadurch gekennzeichnet, dass** es einen oder mehrere Schränke (8) umfasst, die parallel angeordnet sind, wobei jeder der Schränke (8) eine Vielzahl von Verzweigungen (9) umfasst, die parallel angeordnet sind.

3. Kapazitives Energiespeichersystem (5) nach einem der Ansprüche 1 oder 2, **dadurch gekennzeichnet, dass** jede Verzweigung (9) eine Vorrichtung zur elektrischen Isolierung (13) der Verzweigung umfasst, um einen Wartungsvorgang jeder Verzweigung (9) zu ermöglichen.

4. Kapazitives Energiespeichersystem(5) nach einem der Ansprüche 1 bis 3, **dadurch gekennzeichnet, dass** das Mittel zur Umwandlung des Stroms (CVi) und das Mittel zur kapazitiven Speicherung (CS) jeder Verzweigung (9) abnehmbar sind.

5. Kapazitives Energiespeichersystem (5) nach einem der Ansprüche 1 bis 4, **dadurch gekennzeichnet, dass** jeder Schrank (8) Gleitschienen umfasst, auf denen das Mittel zur Umwandlung des Stroms (CVi) und das Mittel zur kapazitiven Speicherung (SC) auf abnehmbare Weise montiert werden können.

6. Kapazitives Energiespeichersystem(5) nach einem der Ansprüche 1 bis 5, **dadurch gekennzeichnet, dass** das Mittel zur kapazitiven Speicherung (SC) Gruppen (SC) von Superkondensator (12) in Serie umfasst.

7. Kapazitives Energiespeichersystem (5) nach einem der Ansprüche 1 bis 6, **dadurch gekennzeichnet, dass** das Mittel zur Umwandlung einen umkehrbaren Umwandler (CVi) umfasst.

8. Kapazitives Energiespeichersystem (5) nach einem der Ansprüche 1 bis 7, **dadurch gekennzeichnet, dass** es Mittel zum Selbstlernen umfasst, die angeordnet sind, um die Spannungsschwellen in Abhängigkeit von einer Echtzeitanalyse der Strom- und Spannungsanforderungen im Netz zur Verteilung der elektrischen Leistung (4) zu modifizieren.

9. Kapazitives Energiespeichersystem (5) nach einem der Ansprüche 6 und 7, **dadurch gekennzeichnet, dass** die Mittel zur Regulierung der Spannung angeordnet sind, um die Regulierung in Abhängigkeit von der Spannung, die an den Klemmen der Gruppen (SC) von Superkondensator (12) jeder Verzweigung gemessen werden, der Messung der Intensität des Stroms (Hi) zwischen dem umkehrbaren Umwandler (CVi) und den Gruppen (SC) von Superkondensator (12) und der Messung der Spannung (UF) am Eingang des Systems zur Speicherung (5) durchzuführen.

10. Infrastruktur für elektrische Passagiertransporte (1), umfassend mindestens ein Fahrzeug (2), das mit einer Rückgewinnungs-Bremsvorrichtung (3) und mindestens einem Kapazitives Energiespeichersystem(5) nach einem der Ansprüche 1 bis 10 ausgestattet ist, wobei das System zur kapazitiven Speicherung (5) dazu bestimmt ist, Energie zu speichern, die von der Bremsvorrichtung (3) erzeugt wird.

11. Verfahren zur Steuerung eines kapazitiven Energiespeichersystem (5), das ausgelegt ist, um mit einem Netz zur Verteilung von elektrischer Leistung (4) verbunden zu sein, wobei das System zur Speicherung (5) eine Vielzahl von Verzweigungen (9) umfasst, die parallel angeordnet sind, die jeweils in Serie ein Mittel zur Umwandlung des Stroms (CVi) und ein Mittel zur kapazitiven Speicherung (SC) umfassen, wobei das Verfahren die Schritte umfasst, die aus Folgendem bestehen:
- Messen an den Klemmen der Verzweigungen (9) der Eingangsspannung (UF), die vom Netz zur Verteilung (4) an einen Eingang (A) des Systems zur Speicherung (5) geliefert wird,
- Bestimmen eines optimalen Betriebspunkts, der einerseits ermöglicht, die maximale Energie wiederzugewinnen, die am Eingang (A) des Netzes zur Verteilung (4) vorhanden ist, wobei keine Energie von der Versorgungsverzweigung entnommen wird, und andererseits ermöglicht, die Erzeugung von Energie, die in den Mitteln zur kapazitiven Speicherung (SC) der Verzweigungen (9) gespeichert ist, vorrangig gegenüber der Erzeugung von Energie durch Versorgung zu begünstigen,
- Bestimmen mindestens einer Ladespannungsschwelle (CCUFCH) und einer Entladespannungsschwelle (CCUFDCH) durch die Berechnung einer mittleren Leerlaufspannung des Systems zur Speicherung von kapazitiver Energie (5), entsprechend einer korrigierten Eingangssollwertspannung (CCUF), und
- Vergleichen der Eingangsspannung (UF) mit einer Ladeschwelle (CCUFCH) und einer Entladeschwelle (CCUFDCH), um einen Lade- und Entlade-Betriebsmodus zu bestimmen.

12. Verfahren nach einem der Ansprüche 12 bis 13, **dadurch gekennzeichnet, dass** das Verfahren einen Schritt des Selbstlernens umfasst, der ermöglicht, die korrigierte Eingangssollwertspannung (CCUF) in Form eines Durchschnitts der Spannungswerte (UF) zu bestimmen, die während eines Zeitraums erfasst wurden, in dem der Versorgungsstrom (IST) des Netzes zur Verteilung 4 geringer als eine vorbestimmte Schwelle ist.

13. Verfahren nach einem der Ansprüche 12 bis 14, **dadurch gekennzeichnet, dass** die Schritte des Bestimmens der Lade- (CCUFCH) und Entladespannungsschwellen (CCUFDCH) in Abhängigkeit vom Wert der korrigierten Eingangssollwertspannung (CCUF) und einer vorbestimmten Verschiebung dieses Werts der korrigierten Eingangssollwertspannung (CCUF) durchgeführt werden.

## Claims

1. A capacitive energy storage system (5) able to be linked to an electric power distribution network (4) by an input (A) and which comprises at least one current conversion means and at least one capacitive energy storage means including a plurality of branches (9) disposed in parallel, each comprising, in series, a current conversion means (CVi) and a capacitive storage means (SC), the current conversion means (CVi) being disposed in series with the capacitive storage means (SC), **characterized in that** each branch (9) comprises voltage regulation means (USC) of the capacitive storage means (SC), the voltage regulation means being associated with current limitation means depending on the voltage (USC) and each branch (9) comprises means for regulating the input voltage (UF) of the capacitive energy storage system (5) so as to permanently adjust an optimum operating point allowing, on the one hand, to recover the maximum energy present at the input (A) of the distribution network (4) while picking up no energy in the supply branch and, on the other hand, to favour the generation of energy saved in the capacitive storage means (SC) of the branches (9) prior to the generation of energy by supply, this optimum operating point being obtained by permanently adjusting charge (CCUFCH) and discharge (CCUFDCH) thresholds determined by the calculation an average no-load voltage of the capacitive energy storage system (5) corresponding to a corrected input voltage setpoint (CCUF).

2. The capacitive energy storage system (5) according to claim 1 **characterized in that** it comprises one or more rack cabinet(s) (8) disposed in parallel, each of the rack cabinets (8) comprising a plurality of branches (9) disposed in parallel.

3. The capacitive energy storage system (5) according to any of claims 1 or 2 **characterized in that** each branch (9) comprises an electrical insulation device (13) of the branch (9) so as to allow a maintenance operation of each branch (9).

4. The capacitive energy storage system (5) according to any of claims 1 to 3 **characterized in that** the current conversion means (CVi) and the capacitive storage means (SC) of each branch (9) are removable.

5. The capacitive energy storage system (5) according to any of claims 1 to 4 **characterized in that** each rack cabinet (8) comprises slides on which the current conversion means (CVi) and the capacitive storage means (SC) may be removably mounted.

6. The capacitive energy storage system (5) according to any of claims 1 to 5 **characterized in that** the capacitive storage means (SC) comprises groups (SC) of supercapacitors (12) in series.

7. The capacitive energy storage system (5) according to any of claims 1 to 6 **characterized in that** the conversion means comprises a reversible converter (CVi).

8. The capacitive energy storage system (5) according to any of claims 1 to 7 **characterized in that** it comprises self-learning means arranged to modify the voltage thresholds depending on a real time analysis of the current and voltage requirements in the electric power distribution network (4).

9. The capacitive energy storage system (5) according to any of claims 6 and 7 **characterized in that** the voltage regulation means are arranged to carry out the regulation depending on the voltage measured at the terminals of the groups (SC) of supercapacitors (12) of each branch (9), the measurement of the current intensity (IHi) between the reversible converter (CVi) and the groups (SC) of supercapacitors (12) and the measurement of the voltage (UF) at the input of the storage system (5).

10. An infrastructure of electric transport (1) of passengers comprising at least one vehicle (2) equipped with a regenerative braking device (3) and at least one capacitive energy storage system (5) according to any of claims 1 to 10, the capacitive storage system (5) being intended to store the energy generated by the braking device (3).

11. A method for controlling a capacitive energy storage system (5) able to be linked to an electric power distribution network (4), the storage system (5) including a plurality of branches (9) disposed in parallel, each comprising, in series, a current conversion means (CVi) and a capacitive storage means (SC), the method comprising the steps consisting of:
- measuring at the terminals of the branches (9) the input voltage (UF) provided by the distribution network (4) at the input (A) of the storage system (5),
- determining an optimum operating point allowing, on the one hand, to recover the maximum of energy present at the input (A) of the distribution network (4) while picking up no energy in the supply branch and, on the other hand, to favour the generation of energy saved in the capacitive storage means (SC) of the branches (9) prior to the generation of energy by supply,
- determining at least one charge voltage threshold (CCUFCH) and one discharge voltage threshold (CCUFDCH) by the calculation an average no-load voltage of the capacitive energy storage system (5) corresponding to a corrected input voltage setpoint (CCUF), and
- comparing the input voltage (UF) with a charge threshold (CCUFCH) and a discharge threshold (CCUFDCH) in order to determine a charge and discharge operating mode.

12. The method according to any of claims 12 to 13, **characterized in that** the method comprises a self-learning step allowing to determine the corrected input voltage setpoint (CCUF) as an average of values of voltages (UF) acquired during a period where the supply current (IST) of the distribution network 4 is lower than a predetermined threshold.

13. The method according to any of claims 12 to 14, **characterized in that** the steps of determining the charge (CCUFCH) and discharge (CCUFDCH) voltage thresholds are carried out depending on the value of the corrected input voltage setpoint (CCUF) and a predetermined shift of this corrected input voltage setpoint (CCUF) value.
